# EUROPEAN PATENT SPECIFICATION

(11) **EP 3 860 054 B1**
(45) Date of publication and mention of the grant of the patent: **02.08.2023**
(21) Application number: 20155114.0
(22) Date of filing: 03.02.2020
(51) Int. Cl.: H04L 12/28, H05B 47/19

(54) **ATMOSPHERE FUNCTION CONTROL IN AN AREA IN OR ADJACENT A BUILDING**
ATMOSPHÄRENFUNKTIONSSTEUERUNG IN EINEM BEREICH IN ODER NEBEN EINEM GEBÄUDE
COMMANDE DE FONCTION D'ATMOSPHÈRE DANS UNE ZONE SITUÉE DANS UN BÂTIMENT OU À PROXIMITÉ DE CELUI-CI

(43) Date of publication of application: 04.08.2021
(73) Proprietor: ABB Schweiz AG, 5400 Baden (CH)
(72) Inventor: GOPALAKRISHNAN, Gayathri, 171 71 Solna (SE); LUND, Lovisa, 114 36 Stockholm (SE); LÖFGREN, Sofia, 724 62 Västerås (SE); JONSSON, Christoffer, 421 66 Göteborg (SE)
(74) Representative: Kransell & Wennborg KB

(56) References cited:
- CN-U- 206 164 958
- US-A1- 2012 303 768
- US-A1- 2018 092 192

## Description

### TECHNICAL FIELD

The invention relates to the control of atmosphere functions in or adjacent a building. More particularly, the invention relates to an atmosphere controlling arrangement for provision in a building automation system as well as such a building automation system.

### BACKGROUND

The evolution of building automation has led to a significant increase in the number of features and functions that adorn every room. Unfortunately, there is a disproportionate lag in the advancements in interfaces that enable the control of these functions. The interfaces that are available to the users to control these functions are typically provided as wall switches, complex wall mounted control panels or mobile devices.

One type of switch is the multi-way switch. This switch is commonly used to control the same light (or other load) from two or more positions. However, home owners often discover their need for multi-way switches or that there is a need for a change of switches way past commissioning and installation. Having to hire an electrician, and rewiring is often expensive, thus forcing occupants to consider other solutions such as smart switches or lamps that can be controlled by apps and voice assistants. These alternatives are fairly expensive, seldom easy to set up and in many cases are an over-kill for the simple need of being able to control the lights from two places. Furthermore, even if the need for multi-way switching is identified early on, the installation requires some cost and significant effort from the electrician for wiring. Thus, easier implementation of multi-way switching would benefit both installers and home-owners.

A function may thus be controlled at one position in or adjacent the building. However, it may at times be of interest to control the function from another selectable position. A light source and a master control module controlling the light source may thus be placed in one position, while a remote control module that wirelessly communicates with the master control module may be provided at another position. One example of this is disclosed in EP 3521723, where a remote control module communicates wirelessly with a master control module.

Documents US 2012/303768 A1, US 2018/092192 A1 and CN 206 164 958 U represent further prior art relevant with regard to what is disclosed herewith.

It would thus be of interest to increase the flexibility. It would for instance be of interest to allow a user to freely change the master control module with which a remote control module wirelessly communicates in order to influence a different atmosphere function. This may be of interest when installing a home automation system. It may also be of interest after installation. A user may for instance want to change from using the same remote control module for controlling a first light source to a second light source. Such a change should also be possible to implement in a simple way without any new special configuration of the control modules or the wireless interfaces. It may additionally be of interest if this simplicity of change can be combined with secure and high-quality communication. The invention is concerned with one or more of the above-mentioned problems.

### SUMMARY

One object of the invention is therefore to provide a more user friendly way of interconnecting remote control modules with master control modules in an atmosphere function control arrangement of a building automation system.

This object is according to a first aspect achieved by an atmosphere controlling arrangement for provision in a building automation system according to claim 1.

The object is according to a second aspect achieved by a building automation system comprising the atmosphere controlling arrangement according to the first aspect and according to claim 13.

The portable wireless communication module may be a grippable module. It may thus be a module that can be gripped, i.e. that is possible to grip, such as between two fingers of a hand.

The first and second wireless interface may have a pre-defined dedicated communication channel between them, which channel no other wireless interface can use.

The first slot may comprise a first electrical interface and the portable wireless communication module may comprise a second electrical interface, where the first and second electrical interfaces may form an electrical connection when the portable wireless communication module is inserted in the first slot.

According to the invention the housing of the other of the control modules comprises a second slot adapted for receiving and mating with portable wireless communication modules. The arrangement further comprises a second portable wireless communication module insertable in the second slot for connection to the control unit of this other control module and equipped with the second wireless interface. The second slot may then comprise a third electrical interface and the second portable wireless communication module may comprise a fourth electrical interface, where the third and fourth electrical interfaces may form an electrical connection when the second portable wireless communication module is inserted in the second slot. The third electrical interface may additionally be electrically connected to the control unit of the other of the control modules, which does not comprise the first slot.

Also, the remote control module housing may comprise a user input element connected to the remote control unit for receiving user inputs influencing the atmosphere function. The remote control module may additionally or instead comprise a sensor connected to the remote control unit for influencing the atmosphere function based on sensor measurements.

It is additionally possible that the master control module housing comprises a user input element connected to the master control unit for receiving user inputs influencing the atmosphere function.

The master control unit may be configured to communicate with a manoeuvrable actuating element set to actuate an activity performing element. This may be done through the master control unit being electrically connected to the manoeuvrable element or through communicating with it wirelessly. The activity performing element is in turn set to influence the atmosphere in the area in or adjacent the building. The atmosphere function may be a light level control function, where the manoeuvrable actuation element may be a switch and the activity performing element may be a light source.

The arrangement may further comprise a distance determining block configured to determine the distance between the first wireless interface and the second wireless interface, compare the determined distance with a distance threshold and alert a user of the arrangement that the distance between the two housings is too long in case the distance threshold is exceeded. The distance determining block may be included in the remote control module for instance as a part of the remote control unit. Alternatively, it may be included in the master control module, for instance as a part of the master control unit.

The invention according to the above-mentioned aspects has a number of advantages. It simplifies the connection of a remote control module to a master control module. The connection can be made fast and without requiring the user to make any communication configurations. It is also simple to change to which other control module a remote control module or a master control module is to be connected.

The wireless interfaces are with advantage short-range low power wireless communication interfaces, such as Bluetooth Low Energy or ZigBee.

The atmosphere of an area is the atmosphere as experienced by a user, i.e. the user experience of the area in or adjacent the building, such as the user experience caused by illumination achieved through the use of light sources and blinds, heating, ventilation, air-conditioning etc.

A manoeuvrable actuation element may be a switch, such as a so-called dimmer switch with a variable resistance, am on/off switch, a toggle switch or a rocker switch.

It should be emphasized that the term "comprises/comprising" when used in this specification is taken to specify the presence of stated features, integers, steps or components, but does not preclude the presence or addition of one or more other features, integers, steps, components or groups thereof.

### BRIEF DESCRIPTION OF THE DRAWINGS

The invention will now be described in more detail in relation to the enclosed drawings, in which:
fig. 1 schematically shows a room with a light source and an atmosphere controlling arrangement for actuating the light source, where the atmosphere controlling arrangement comprises a master control module and a remote control module at different positions in the room,
fig. 2 shows a front view of one version of the master control module having a housing in which a user input element is provided and also comprising a slot in which a portable wireless communication module is inserted,
fig. 3 shows a front view of one version of the remote control module having a housing in which a user input element is provided and also comprising a slot in which a portable wireless communication module is inserted,
fig. 4 schematically shows an example, not falling within the scope of the invention, of an atmosphere controlling arrangement comprising the master control module, the remote control module and the portable wireless communication module together with a light source and a switch used to control it, and
fig. 5 schematically shows an example, not falling within the scope of the invention, of an atmosphere controlling arrangement comprising the master control module, the remote control module and the portable wireless communication module together with the light source and switch used to control it.

### DETAILED DESCRIPTION

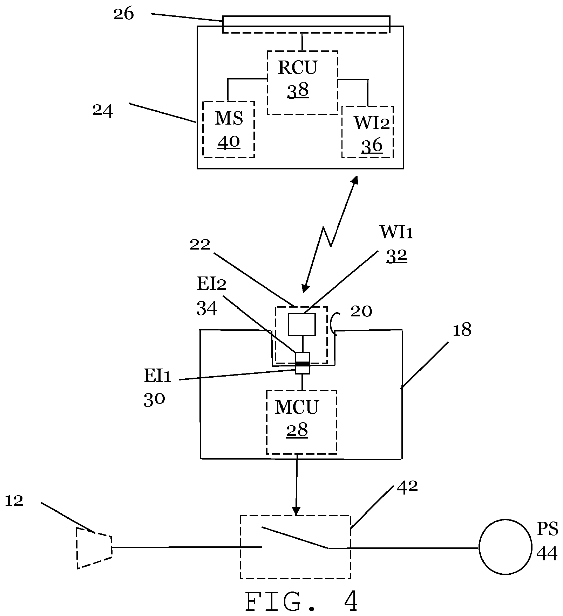

The invention is defined by the independent claims. The examples corresponding to figures 4-5 are not according to the invention and do not fall within the scope of the invention. They are present for illustration purposes only.

In the following description, for purposes of explanation and not limitation, specific details are set forth such as particular architectures, interfaces, techniques, etc. in order to provide a thorough understanding of the invention. However, it will be apparent to those skilled in the art that the invention may be practiced in other embodiments that depart from these specific details. In other instances, detailed descriptions of well-known devices, circuits and methods are omitted so as not to obscure the description of the invention with unnecessary detail.

The invention is generally directed towards the atmosphere of an area in or adjacent a building, which atmosphere is influenced through using atmosphere functions in a building automation system. The area may be an area in a building, such as a room. However, it may also be a hallway, a corridor or some other area in or outside the building, such as a garden or a patio.

In order to enable this there is provided an atmosphere controlling arrangement comprising a master control module and a remote control module, which arrangement is provided for actuating one or more of the above-mentioned functions. The atmosphere function may be a ventilation, temperature control and/or or a light level control function that is actuated via a manoeuvrable actuating element. In case the atmosphere function is a heating function used for temperature control, the manoeuvrable actuating element may be a thermostat. In the case of a light level control function, the manoeuvrable actuating element may be a switch, such as an on/off switch, toggle switch or a rocker switch. It may also be a switch with variable resistance, such as a dimmer switch. However, also other types of elements are possible. The manoeuvrable actuating element may for instance also be a motor for a blind. It may thus be a switch that may be operated for on/off functionality as well as for varying the on/off functionality using the variable resistance.

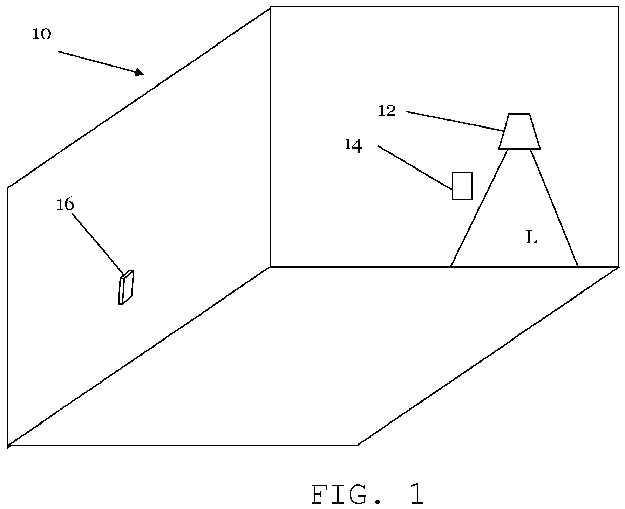

Fig. 1 schematically shows a building area in the form of a room 10 comprising a number of walls and in this room there is an atmosphere controlling arrangement, i.e. an arrangement for controlling the atmosphere in an area of a building, such as the room 10. The atmosphere controlling arrangement comprises a master control module 14 and a remote control module 16 together used for controlling the atmosphere function and more particularly together used for controlling a manoeuvrable actuating element (not shown) used in the control of the atmosphere function. The manoeuvrable actuating element in turn controls an activity performing element 12 that influences the atmosphere in the building area. In this example the activity performing element 12 is a light source, such as a lamp, emitting light L in the room 10. The light source is typically attached to the same wall as the master control module 14 and also with advantage placed in its vicinity. The activity performing element 12 may thus be placed adjacent the master control module 14, although this is no requirement. The manoeuvrable actuating element may in turn be placed inside the wall adjacent the master control module 14, although this is no requirement either.

The remote control module 16 is remotely located from the master control module 14. As an example it is placed on a second wall of the room 10. The remote control module 16 also communicates wirelessly with the master control module 14.

As stated above the atmosphere controlling arrangement is provided for controlling the atmosphere of the room and one way of doing this is in fig. 1 exemplified by the light source 12 emitting light L, which light source may thus be a lamp that is controlled for changing the illumination of the room.

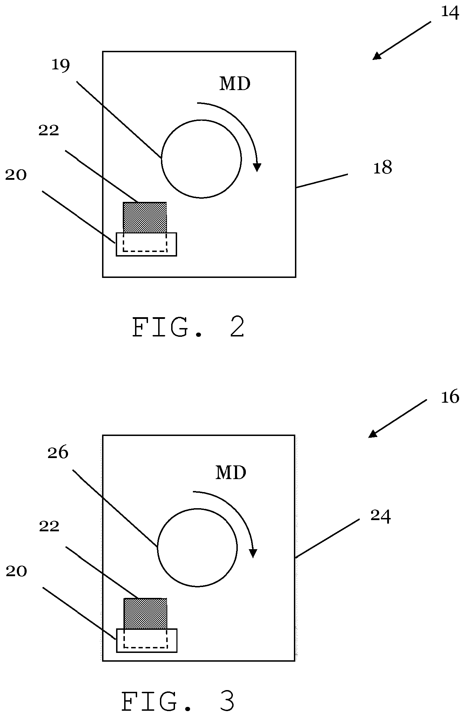

Fig. 2 shows a front view of a version of the master control module 14. As can be seen in fig. 2, the master control module 14 comprises a housing 18 and the housing 18 comprises a user input element 19, which user input element 19 may be pushed into the housing 18 and/or turned around an axis defined through a surface of the housing 18, such as being perpendicular to the surface of the master control module housing 18 on which the element 19 is provided.

The user input element 19 may because of this be moveable along a direction of movement MD. In this variation the user input element 19 is possible to turn around the previously mentioned axis of rotation and therefore the direction of movement MD is in this case a radial direction of movement. It should be realized that also other types of movement are possible such as a sliding motion. The housing 18 also compromises control functionality of the master control module (not shown). In the master control module housing 18 there is provided a slot 20 in which at least one portable, grippable wireless communication module may be inserted. In the figure one such portable, grippable wireless communication module 22 is shown as being inserted. The wireless communication module 22 may be sized for being possible to grip between two fingers of a hand. It may for instance be sized as a Secure Digital (SD) disc or like a Universal Serial Bus (USB) stick.

Fig. 3 shows a front view of one version of the remote control module 16. The remote control module 16 comprises a housing 24 and the housing 24 comprises a user input element 26, which user input element may also be pushed into the housing 24 and/or turned around an axis defined through a surface of the housing 24, such as being perpendicular to the surface of the remote control module housing 24 on which the element 26 is provided.

The user input element 26 may because of this be moveable along a direction of movement MD. Also, in this variation the user input element 26 is possible to turn around the axis of rotation and therefore the direction of movement MD is also in this case a radial direction of movement. Also here, other types of movement are possible such as a sliding motion.

In the remote control module housing 24 there is furthermore provided a slot 20, in which at least one portable, grippable wireless communication module may be inserted. In the figure a first such portable grippable wireless communication module 22 is inserted.

It is as can be seen above possible that one or both of the control modules comprises a slot for receiving a wireless communication module. However, it is preferred that only one has such a slot. It is also in some cases only the master control module that has a slot.

It is likewise possible that the master control module lacks a user input element.

Fig. 4 schematically shows an example of an atmosphere controlling arrangement comprising the master control module with the master control module housing 18 and remote control module with the remote control module housing 24, where the master control module is configured to communicate with the manoeuvrable actuating element 42, which in turn leads to the activity performing element 12. As the activity performing element 12 is a light source and the manoeuvrable actuating element 42 is a switch, the manoeuvrable actuating element 42 is placed in a conductor stretching between a power source 44 and the light source.

A master control unit 28 is provided inside the master control module housing 18 and controls the manoeuvrable actuating element 42. It should however be realized that it is as an alternative possible to place the master control unit 28 outside of the housing 18. The master control unit 28 may be electrically connected to the manoeuvrable actuating element 42. Alternatively, the master control module may communicate wirelessly with the manoeuvrable actuating element 42. The manoeuvrable actuating element 42 may in turn be set to actuate the activity performing element 12 for influencing the atmosphere in the building area.

The housing 24 of the remote control module comprises the user input element 26, a remote control unit RCU 38 and an optional sensor 40, which may be a motion sensor MS, where the user input element 26 and the sensor 40 are both connected to the remote control unit 38. Thereby the remote control unit 38 can receive user inputs via the user input element 26, which user inputs may influence the atmosphere function. It can additionally receive sensor measurements from the sensor 40 for influencing the atmosphere function based on these sensor measurements.

The user input element 26 is fixedly attached to and extends outside an exterior surface of the remote control module housing 24. It cannot be removed from the housing 24. However, it may be moved in relation to the housing 24. It may for instance be depressed through an opening of the housing 24. It may also be rotated or moved straight in relation to the exterior surface of the housing 24.

As an example the user input element 26 is moveable and may when depressed be moved towards the interior of the remote control module housing 24. It is additionally or instead possible to turn the user input element 26. A user may thereby actuate the user input element 26. It is optionally also possible that the master control module housing 18 comprises a user input element connected to the master control unit 38 for receiving user inputs influencing the atmosphere function. This user input element is preferably of the same type as the user input element 26 of the remote control module.

As can be seen in fig. 4, a first slot 20 is provided in the master control module housing 18, while the remote control module housing 24 lacks slots.

In this first slot 20 there is provided a first electrical interface EI1 30 for connection to a second electrical interface EI2 34 of a portable communication module 22. The first electrical interface 30 is also connected to the master control unit 28 inside the master control module housing 18. The first slot 20 thus comprises the first electrical interface 30 and the portable wireless communication module 22 comprises the second electrical interface 34, where the first and second electrical interfaces form an electrical connection when the portable wireless communication module 22 is inserted in the first slot 20.

The portable communication module 22 comprises a first wireless interface WI1 32 that is connected to the second electrical interface 34. Thereby the first electrical interface 30 is mated with the second electrical interface 34 in order to convey signals between the first wireless interface 32 and the master control unit 28 as well as in order to provide power for the first wireless interface 32.

The first wireless interface 32 communicates wirelessly with a second wireless interface WI2 36 in the remote control module housing 24, where the second wireless interface 36 is also connected to the remote control unit 38. The wireless interfaces may be wireless communication interfaces.

In operation, actuation of the user input element 26 is detected by the remote control unit 38 and translated into one or more signals that are being transmitted to the master control unit 28 via the first and second wireless interfaces 32 and 36. The master control unit 28 then transforms these received one or more signals into at least one control signal used to control the manoeuvrable actuating element 42, which then controls the atmosphere function provided by the activity performing element 12. If the atmosphere function is a light or illumination level control function, the manoeuvrable actuation element 42 is a switch and the activity performing element is a light source 12, then a depressing of the user input element 26 may be used to open or close the switch for turning on or off the light emitted by the light source, while a turning of the user input element 26 may be used to adjust the variable resistance of the switch for influencing the light emitted by the light source.

The sensor 40 may also emit sensor signals, such as motion detection signals, that are provided to the remote control unit 38 in order to be converted to at least one control signal used for controlling the manoeuvrable actuating element 42. It is possible that the remote control unit 38 performs this conversion and then transmits the at least one control signal to the master control unit 28 via the first and second wireless interfaces 32 and 36. As an alternative the remote control unit 38 merely transmits the one or more sensor signals to the master control unit 28 via the first and the second wireless interfaces 32 and 36, which sensor signals the master control unit 28 then transform into at least one control signal. The master control unit 28 then uses the at least one control signal to control the manoeuvrable actuating element 42. A received motion detecting signal may for instance be used to turn on a switch.

In the example shown in fig. 4 signals from both the detector 40 and the user input element 26 may be used for controlling the manoeuvrable actuating element 42. It should however be realized that it is possible that only signals from the user input element 26 are used, in which case no sensor needs to be included in the remote control module. It is likewise possible that only sensors are used, in which case no user input element may be needed in the remote control module.

It can thereby be seen that the arrangement comprises a master control module having a housing 18 and a master control unit 28 controlling an atmosphere function in the building, a remote control module having a housing 24 comprising a remote control unit 38 for actuating the atmosphere function via the master control unit 28, where at least one of the housings 18 comprises at least one first slot 20 adapted for receiving and mating with portable wireless communication modules and a first portable wireless communication module 22 insertable in the first slot 20 for connection to the control unit 28 of the corresponding control module and equipped with a first wireless interface 32. A second wireless interface 36 provided for the other of the control modules is in turn configured to communicate with the first wireless interface 32, such that the remote control module can actuate the atmosphere function when the wireless communication module is inserted in the first slot. The housing with the first slot is the housing 18 of the master control module 14 and the first electrical interface 30 is electrically connected to the master control unit 28. Furthermore, the housing of the other control module comprises the second wireless interface 36 and additionally lacks slots. The remote control housing 24 is the housing of this other control module.

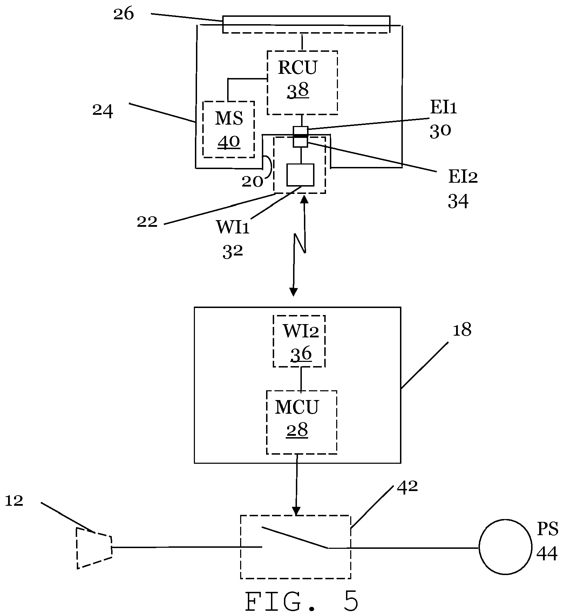

Fig. 5 shows an example in which the housing 24 of the remote control module comprises a first slot 20, while the housing 18 of the master control module lacks slots. Instead the master control module housing 18 comprises the second wireless interface 36 connected to the master control unit 28.

As can be seen in the figure, the first slot 20 in the housing 24 also here comprises the first electrical interface 30 for connection to the second electrical interface 34 of the portable communication module 22. However, in this case the first electrical interface 30 is connected to the remote control unit 38.

Also in this example, the portable communication module 22 comprises the first wireless interface 32 that is connected to the second electrical interface 34. Thereby the first electrical interface 30 is mated with the second electrical interface 34 in order to convey signals between the first wireless interface 32 and the remote control unit 38 as well as in order to provide power for the first wireless interface 32.

It can be seen that in this example, the housing with the first slot is the housing 24 of the remote control module 16 and the first electrical interface 30 is electrically connected to the remote control unit 38. The housing of the other control module that comprises the second wireless interface 32 is in turn the master control module housing 18, which additionally lacks slots.

In both of the examples of figures 4 and 5 described above the first wireless interface of the wireless communication module may be preconfigured to provide a communication channel to the second wireless interface, where the channel may be immediately used, without any further configurations or settings, when the wireless communication module is inserted in a slot.

According to the invention both housings comprise slots for receiving wireless communication modules. The master control module housing may thereby comprise a first slot for receiving a first wireless communication module and the remote control module housing may comprise a second slot for receiving a second wireless communication module. A pair of wireless communication modules may in this case be pre-configured to provide a communication channel between each other.

It can thereby be seen that in this embodiment, the other of the control modules comprises a second slot adapted for receiving and mating with portable wireless communication modules and the arrangement further comprises a second portable wireless communication module insertable in the second slot for connection to the control unit of the other control module and equipped with the second wireless interface. The second slot comprises a third electrical interface and the second portable wireless communication module comprises a fourth electrical interface, where the third and fourth electrical interfaces form an electrical connection when the second portable wireless communication module is inserted in the second slot. Furthermore, the third electrical interface is electrically connected to the control unit of the other control module.

The wireless interfaces may be set to communicate with each other according to a suitable wireless standard, preferably short-range, such as Bluetooth like Bluetooth Low Energy (BLE) or ZigBee. However, also Wi-Fi, i.e. IEEE 802.11 is possible.

The use of two control modules allows remote actuation of atmosphere functions.

The first and second wireless interface may have a dedicated pre-defined communication channel defined between them, which channel no other wireless interface may use. The communication between the two wireless interfaces may furthermore be encrypted. The first wireless interface may for this reason be provided with a first encryption key and the second wireless interface may be provided with a corresponding second encryption key. Thereby these two wireless interfaces may have implemented an encrypted communication channel. If a number of known communication channels exist, it is furthermore possible that the channels are selected so that interference between the channels is minimized.

The slot was above shown as receiving one portable communication module. It should be realized that there may exist several remote control modules that can be used for communicating with the master control module via corresponding wireless communication modules. For this reason a slot may comprise a number of electrical interfaces in order to be able to mate with a number of further wireless communication modules. There may also or instead be a number of additional slots in order to receive one or more such additional portable communication modules.

As was mentioned above, it is possible that the master control module comprises a user input element, which preferably is of the same type as the user input element of the remote control module.

When there are multiple portable communication modules in this way, each communication channel may be set to have a minimum interference to and from every other communication channel.

It can be seen in the above given examples, that the atmosphere control arrangement has two types of control modules; a master control module that may be wired or wirelessly communicating with the manoeuvrable actuating element for the activity performing element and one or more remote control modules wirelessly communicating with the master control module, where either the master control module, the remote control module or both is equipped with a slot for receiving a wireless communication module. When the slot is provided in the master control module, there may furthermore be several remote control modules associated with the master control module. In this case each remote control module may be equipped with a wireless communication module. To connect a remote to a master, it is then possible to simply pull out the wireless communication module from a holding structure of the remote control module and put it into an empty slot in the master control module. The wireless communication module acts as a receiver for the radio signals sent by the remote control module and communicates it to the master control unit of the master control module.

It should also be realized that it is possible that there are other master control modules in the building automation system and that the remote control module may be set to communicate with another master control module through the corresponding portable communication module being inserted in the slot of this other master control module.

When there are multiple slots on the master control module, it is possible to connect more than one remote control module to the same master control module. When the activity performing element is a light source and the manoeuvrable actuating element is a switch it is then possible to create a multi way switch, which could be useful in a situation when there is a need for several switches to control the same light source.

In this way electricians and home-owners get full control of which switches are connected and how. It is also easy to change the configuration of connected switches if there is a need to renovate or refurnish. This can also be done without any special configuration of the communication having to be made.

By simplifying the set-up process, and by bringing back the idea and reliability of a physical connection, the atmosphere controlling arrangement presents a more robust, easy to use and scalable wireless solution. It needs no app, wifi or complex instruction manual thus making it simple yet smart.

As was mentioned above, the wireless communication may be based on Radio Frequency (RF) remote control technology. The remote control module may house an RF transmitter, while the wireless communication module may contain an RF receiver and a mechanism to interface with the master control module when plugged into the slot in the housing of the master control module. Additional components may be used to ensure that the pairing is unique and not affected by other RF transmitters in the vicinity.

The master control module may be powered by the power source of the building. Remote control modules on the other hand are wireless. These could be battery powered. However, another way to power a remote control module is through harnessing the kinetic energy as done by EnOcean products. It is for instance possible to harness the energy used to actuate the user input element. It may also be possible to harness ambient light energy.

Each wireless communication module and its respective remote control unit may also contain a visible marker or code to clarify which wireless communication module belongs to which remote control module. This may be advantageous if a user owns multiple remote control modules connected to different master control modules.

The maximum distance at which a remote control modules can communicate with the master control module may additionally be indicated to the user. For this reason the arrangement may comprise a distance determining block configured to determine the distance between the first wireless interface and the second wireless interface, compare the determined distance with a distance threshold and alert a user of the arrangement that the distance between the two housings is too long in case the distance threshold is exceeded. The distance determining block may be included in the master or the remote control module, for instance as a part of the master or remote control unit. The distance determining block may obtain the distance determination based on signal quality measurements, such as signals strength measurements. The signal quality may thus correspond to a distance between the wireless interfaces and when this signal quality is below a signal quality threshold, the distance may be deemed to be too long.

In case the distance determining block is a part of the master control module, the activity performing element may be used to indicate that the distance is too long. If the activity performing element is a light source, it may for instance be controlled to blink, perhaps with a certain frequency in order to signal that the distance is too long. It is in this case also possible to use a separate alerting element such as a speaker emitting a special sound to alert the user. The alerting may thereby be made in such a way that a user at the position of the remote control module will notice it.

The distance determining block may also be a part of the remote control module, in which case the remote control module may comprise an alerting element.

Another way to visually warn the user if the remote control module is placed beyond the transmitting range could be to add a clear range parameter to the products specifications.

While wifi helps extend the range of the remote control modules, it may complicate set up and may be perceived as less robust. Thus, a simpler approach that does not rely on wifi is often be preferred. Low-power short-range solutions like Zigbee or BLE may therefore be preferred.

The master control module may have one, two or three slots depending on the need. The remotes may always have one wireless communication module that could be placed in a corresponding slot of the master control module.

It is envisioned that over time, installers could be encouraged to use master control modules by default thus making future upgrades more likely. With master control modules pre-installed, for instance by an electrician, a home owner could easily purchase remote control modules and attach them wherever they deem necessary.

A natural extension to the remote control module, is the remote sensor. Using the same working principle, a master control module could be automatically triggered by motion sensors, light level sensors or timers.

It is possible that the use of sensors would lead to the need for a battery or other energy harvesting mechanism such as ambient light charging.

Users behavior suggests that atmosphere functions, such as illumination are turned on/off in groups. For example, when a user comes home, he or she may go through a series of light switches turning on lights in different parts of the home. Similarly, when users go to bed or when they leave the house, they turn off multiple lights in quick succession. This can be seen as an opportunity for a version of the arrangement that helps control multiple master control modules from a single panel with remote control modules. The remote control modules and sensors may have a modular design, and using an extendable panel holder, the remote control modules for different master control modules can be put on a wall in a unified panel. This gives the impression of a multi gang switch, yet it can be changed over time to fit the needs of the household.

While such a panel can help control multiple loads wirelessly from the same place, a panel with many remote control modules might be unsightly on an otherwise pristine wall. Thus, a more minimalist solution might be preferred: a remote control module that may communicate with several master control modules through being equipped with multiple wireless communication modules. Each of the wireless communication modules can be plugged into different master control modules. Customizable digital labels may then be used in order to enable users to assign every wireless communication module an icon to keep track of all connected master control modules. The master control modules can be operated all together by pushing the entire module. Individual loads can be controlled by touching a part of the module with the respective icon.

Not embedding the transmitter and receiver in the respective control modules is a conscious choice. Built in receivers don't help the user build a mental model of the system and connectivity. Having a physical wireless communication module provides instant kinesthetic feedback and also helps users complete the set-up process more easily: the physical wireless communication module increases the user's confidence that the system will work as they intend it to. This also has the advantage that a user does not have to make complicated communication configurations. It may additionally be possible to engage in communication immediately as soon as the wireless communication modules have been inserted in their slots.

When designing the remote control module that houses more than one wireless communication module a few other things may need to be considered. During user studies it has been found that a huge advantage of the remote control module switch with multiple wireless communication modules is the possibility to mentally map the positions of the lights to the geometry of the switch. This demands that the remote control module has a two-dimensional surface where the individual user input elements (wireless communication modules) are spread out. Several different options for such a layout with wireless communication module have been explored, with the take away that two to six wireless communication module should be placed in at least two rows, or inserted into two opposite edges, to create the sufficient two-dimensional space.

Another way to create the two-dimensional space on the control module is to only use the remote control modules with a single wireless communication module. If the user input elements would be push buttons with a flat surface, then they could be put on the wall either horizontally or vertically. By placing magnets for piecing the user input elements together in a grid on all sides of every remote control module, it is possible to put the user input elements in any two-dimensional configuration.

A huge advantage of the remote control module with multiple wireless communication module is the possibility to mentally map the positions of the lights to the geometry of the user input elements.

The wireless communication module is small, similar to the size of a micro Secure Digital (SD) or a small Universal Serial Bus (USB) receiver for a wireless mouse. A likely concern is that it could be misplaced. Based on an understanding of how users engage with thermostats and similar equipment, it is estimated that despite the flexibility, users will not frequently connect and reconnect the control modules. Users tend to install and forget, thus having to handle the wireless communication module only very rarely. A distinct numbering or marking scheme which allows users to back track a wireless communication module to its remote control module also avoids confusions when installing multiple remote control modules simultaneously. If initial prototypes show that the wireless communication module is easily misplaced, an approach to reassign wireless communication module can be designed.

The small size lets there be several wireless communication modules in the same master control module but still keeps the size of the control module the same as conventional ones.

A control unit may be provided in the form of a processor with associated program memory including computer program code for performing its functionality. It may also be provided in the form of a digital signal processor (DSP) or Application Specific Integrated Circuit (ASIC) or Field-Programmable Gate Array (FPGA). A wireless interface may in turn be realized as a BLE or ZigBee chip While the invention has been described in connection with what is presently considered to be most practical and preferred embodiments, it is to be understood that the invention is not to be limited to the disclosed embodiments. The invention is only to be limited by the following claims.

## Claims

1. An atmosphere controlling arrangement for provision in a building automation system, the arrangement comprising:
a master control module (14) having a housing (18) and a master control unit (28) controlling an atmosphere function in an area (10) in or adjacent the building,
a remote control module (16) having a housing (24) comprising a remote control unit (38) for actuating the atmosphere function via the master control unit (28), wherein the housing (18; 24) of one of the control modules (14; 16) comprises at least one first slot (20) adapted for receiving and mating with portable wireless communication modules,
a first portable wireless communication module (22) insertable in said first slot (20) for connection to the control unit (28; 38) of the corresponding control module (14; 16) and equipped with a first wireless interface (32),
wherein the arrangement comprises:
a second portable wireless communication module equipped with a second wireless interface (36) for the other of the control modules and configured to communicate wirelessly with the first wireless interface (32), such that the remote control module can actuate the atmosphere function when the first portable wireless communication module is inserted in the first slot, and
the housing of the other of the control modules comprises a second slot adapted for receiving and mating with portable wireless communication modules, where the second portable wireless communication module is insertable in said second slot for connection to the control unit of said other of the control modules (28).

2. The atmosphere controlling arrangement according to claim 1, wherein the first slot comprises a first electrical interface (30) and the portable wireless communication module (22) comprises a second electrical interface (34), where the first and second electrical interfaces form an electrical connection when the portable wireless communication module (22) is inserted in said first slot (20).

3. The atmosphere controlling arrangement according to claim 1 or 2, wherein the housing with said first slot is the housing (18) of the master control module (14) and the first electrical interface (30) is electrically connected to the master control unit (28).

4. The atmosphere controlling arrangement according to claim 1 or 2, wherein the housing with said first slot is the housing (24) of the remote control module (16) and the first electrical interface (30) is electrically connected to the remote control unit (38).

5. The atmosphere controlling arrangement according to any previous claim, wherein the second slot comprises a third electrical interface and the second portable wireless communication module comprises a fourth electrical interface, where the third and fourth electrical interfaces form an electrical connection when the second portable wireless communication module is inserted in said second slot.

6. The atmosphere controlling arrangement according to claim 5, wherein the third electrical interface is electrically connected to the control unit of the other control module.

7. The atmosphere controlling arrangement according to any previous claim, wherein the remote control module housing (24) comprises a user input element (26) connected to the remote control unit (38) for receiving user inputs influencing the atmosphere function.

8. The atmosphere controlling arrangement according to any previous claim, wherein the remote control module (16) comprises a sensor (40) connected to the remote control unit (38) for influencing the atmosphere function based on sensor measurements.

9. The atmosphere controlling arrangement according to any previous claim, wherein the master control module housing (18) comprises a user input element connected to the master control unit (38) for receiving user inputs influencing the atmosphere function.

10. The atmosphere controlling arrangement according to any previous claim, wherein the master control unit (28) is configured to communicate with a manoeuvrable actuating element (42) set to actuate an activity performing element (12) set to influence the atmosphere in the area in or adjacent the building.

11. The atmosphere controlling arrangement according to any previous claim, further comprising a distance determining block configured to determine the distance between the first wireless interface and the second wireless interface, compare the determined distance with a distance threshold and alert a user of the arrangement that the distance between the two housings is too long in case the distance threshold is exceeded.

12. The atmosphere controlling arrangement according to any previous claim, wherein the atmosphere function is a light level control function, where the manoeuvrable actuation element (42) is a switch and the activity performing element (12) is a light source.

13. A building automation system comprising the atmosphere controlling arrangement according to any previous claim.

## Patentansprüche

1. Atmosphärensteuerungsanordnung zur Bereitstellung in einem Gebäudeautomatisierungssystem, wobei die Anordnung Folgendes umfasst:
ein Hauptsteuermodul (14) mit einem Gehäuse (18) und einer Hauptsteuereinheit (28), die eine Atmosphärenfunktion in einem Bereich (10) in oder neben dem Gebäude steuert,
ein Fernsteuerungsmodul (16) mit einem Gehäuse (24), umfassend eine Fernsteuerungseinheit (38) zum Betätigen der Atmosphärenfunktion über die Hauptsteuereinheit (28), wobei das Gehäuse (18; 24) eines der Steuermodule (14; 16) zumindest einen ersten Schlitz (20) umfasst, der angepasst ist zum Aufnehmen und Inkontaktkommen mit tragbaren drahtlosen Kommunikationsmodulen,
ein erstes tragbares drahtloses Kommunikationsmodul (22), einsetzbar in den ersten Schlitz (20) zur Verbindung mit der Steuereinheit (28; 38) des entsprechenden Steuermoduls (14; 16) und ausgestattet mit einer ersten drahtlosen Schnittstelle (32),
wobei die Anordnung Folgendes umfasst:
ein zweites tragbares Kommunikationsmodul, ausgestattet mit einer zweiten drahtlosen Schnittstelle (36) für das andere der Steuermodule und ausgelegt zum drahtlosen Kommunizieren mit der ersten drahtlosen Schnittstelle (32), sodass das Fernsteuerungsmodul die Atmosphärenfunktion betätigen kann, wenn das erste tragbare drahtlose Kommunikationsmodul im ersten Schlitz eingesetzt ist, und
wobei das Gehäuse des anderen der Steuermodule einen zweiten Schlitz umfasst, der angepasst ist zum Aufnehmen und Inkontaktkommen mit tragbaren drahtlosen Kommunikationsmodulen, wobei das zweite tragbare drahtlose Kommunikationsmodul in den zweiten Schlitz einsetzbar ist zur Verbindung mit der Steuereinheit des anderen der Steuermodule (28).

2. Atmosphärensteuerungsanordnung nach Anspruch 1, wobei der erste Schlitz eine erste elektrische Schnittstelle (30) umfasst und das tragbare drahtlose Kommunikationsmodul (22) eine zweite elektrische Schnittstelle (34) umfasst, wobei die erste und die zweite elektrische Schnittstelle eine elektrische Verbindung bilden, wenn das tragbare drahtlose Kommunikationsmodul (22) im ersten Schlitz (20) eingesetzt ist.

3. Atmosphärensteuerungsanordnung nach Anspruch 1 oder 2, wobei das Gehäuse mit dem ersten Schlitz das Gehäuse (18) des Hauptsteuermoduls (14) ist und die erste elektrische Schnittstelle (30) elektrisch mit der Hauptsteuereinheit (28) verbunden ist.

4. Atmosphärensteuerungsanordnung nach Anspruch 1 oder 2, wobei das Gehäuse mit dem ersten Schlitz das Gehäuse (24) des Fernsteuerungsmoduls (16) ist und die erste elektrische Schnittstelle (30) elektrisch mit der Fernsteuerungseinheit (38) verbunden ist.

5. Atmosphärensteuerungsanordnung nach einem der vorhergehenden Ansprüche, wobei der zweite Schlitz eine dritte elektrische Schnittstelle umfasst und das zweite tragbare drahtlose Kommunikationsmodul eine vierte elektrische Schnittstelle umfasst, wobei die dritte und die vierte elektrische Schnittstelle eine elektrische Verbindung bilden, wenn das zweite tragbare drahtlose Kommunikationsmodul im zweiten Schlitz eingesetzt ist.

6. Atmosphärensteuerungsanordnung nach Anspruch 5, wobei die dritte elektrische Schnittstelle elektrisch mit der Steuereinheit des anderen Steuermoduls verbunden ist.

7. Atmosphärensteuerungsanordnung nach einem der vorhergehenden Ansprüche, wobei das Fernsteuerungsmodulgehäuse (24) ein Benutzereingabeelement (26), das mit der Fernsteuerungseinheit (38) verbunden ist, zum Empfangen von Benutzereingaben, die die Atmosphärenfunktion beeinflussen, umfasst.

8. Atmosphärensteuerungsanordnung nach einem der vorhergehenden Ansprüche, wobei das Fernsteuerungsmodul (16) einen Sensor (40), der mit der Fernsteuerungseinheit (38) verbunden ist, zum Beeinflussen der Atmosphärenfunktion basierend auf Sensormessungen umfasst.

9. Atmosphärensteuerungsanordnung nach einem der vorhergehenden Ansprüche, wobei das Hauptsteuermodulgehäuse (18) ein Benutzereingabeelement, das mit der Hauptsteuereinheit (38) verbunden ist, zum Empfangen von Benutzereingaben, die die Atmosphärenfunktion beeinflussen, umfasst.

10. Atmosphärensteuerungsanordnung nach einem der vorhergehenden Ansprüche, wobei die Hauptsteuereinheit (28) ausgelegt ist zum Kommunizieren mit einem manövrierbaren Betätigungselement (42), eingestellt zum Betätigen eines Aktivitätsdurchführungselements (12), eingestellt zum Beeinflussen der Atmosphäre im Bereich in oder neben dem Gebäude.

11. Atmosphärensteuerungsanordnung nach einem der vorhergehenden Ansprüche, ferner umfassend einen Abstandsbestimmungsblock, ausgelegt zum Bestimmen des Abstands zwischen der ersten drahtlosen Schnittstelle und der zweiten drahtlosen Schnittstelle, Vergleichen des bestimmten Abstands mit einer Abstandsschwelle und Alarmieren eines Benutzers der Anordnung, dass der Abstand zwischen den zwei Gehäusen zu lang ist, falls die Abstandsschwelle überschritten wird.

12. Atmosphärensteuerungsanordnung nach einem der vorhergehenden Ansprüche, wobei die Atmosphärenfunktion eine Lichtpegelsteuerungsfunktion ist, wobei das manövrierbare Betätigungselement (42) ein Schalter ist und das Aktivitätsdurchführungselement (12) eine Lichtquelle ist.

13. Gebäudeautomatisierungssystem, umfassend die Atmosphärensteuerungsanordnung nach einem der vorhergehenden Ansprüche.

## Revendications

1. Agencement de commande d'atmosphère, destiné à être prévu dans un système d'automatisation de bâtiment, l'agencement comprenant :
un module de commande maître (14) ayant un boîtier (18) et une unité de commande maîtresse (28) commandant une fonction d'atmosphère dans une zone (10) dans le, ou adjacente au, bâtiment,
un module de commande à distance (16) ayant un boîtier (24) comprenant une unité de commande à distance (38) pour actionner la fonction d'atmosphère par l'intermédiaire de l'unité de commande maîtresse (28), dans lequel le boîtier (18 ; 24) d'un des modules de commande (14 ; 16) comprend au moins une première fente (20) adaptée pour recevoir et s'accoupler avec des modules portatifs de communication sans fil,
un premier module portatif de communication sans fil (22), insérable dans ladite première fente (20) pour la connexion à l'unité de commande (28 ; 38) du module de commande correspondant (14 ; 16) et équipé d'une première interface sans fil (32),
dans lequel l'agencement comprend :
un second module portatif de communication sans fil, équipé d'une seconde interface sans fil (36) pour l'autre des modules de commande et configuré pour communiquer sans fil avec la première interface sans fil (32), de telle sorte que le module de commande à distance puisse actionner la fonction d'atmosphère lorsque le premier module portatif de communication sans fil est inséré dans la première fente, et
le boîtier de l'autre des modules de commande comprend une seconde fente adaptée pour recevoir et s'accoupler avec des modules portatifs de communication sans fil, où le second module portatif de communication sans fil est insérable dans ladite seconde fente pour la connexion à l'unité de commande dudit autre des modules de commande (28).

2. Agencement de commande d'atmosphère selon la revendication 1, dans lequel la première fente comprend une première interface électrique (30) et le module portatif de communication sans fil (22) comprend une deuxième interface électrique (34), où les première et deuxième interfaces électriques forment une connexion électrique lorsque le module portatif de communication sans fil (22) est inséré dans ladite première fente (20) .

3. Agencement de commande d'atmosphère selon la revendication 1 ou 2, dans lequel le boîtier avec ladite première fente est le boîtier (18) du module de commande maître (14) et la première interface électrique (30) est électriquement connectée à l'unité de commande maîtresse (28).

4. Agencement de commande d'atmosphère selon la revendication 1 ou 2, dans lequel le boîtier avec ladite première fente est le boîtier (24) du module de commande à distance (16) et la première interface électrique (30) est électriquement connectée à l'unité de commande à distance (38).

5. Agencement de commande d'atmosphère selon une quelconque revendication précédente, dans lequel la seconde fente comprend une troisième interface électrique et le second module portatif de communication sans fil comprend une quatrième interface électrique, où les troisième et quatrième interfaces électriques forment une connexion électrique lorsque le second module portatif de communication sans fil est inséré dans ladite seconde fente.

6. Agencement de commande d'atmosphère selon la revendication 5, dans lequel la troisième interface électrique est électriquement connectée à l'unité de commande de l'autre module de commande.

7. Agencement de commande d'atmosphère selon une quelconque revendication précédente, dans lequel le boîtier de module de commande à distance (24) comprend un élément d'entrée utilisateur (26) connecté à l'unité de commande à distance (38) pour recevoir des entrées utilisateur influençant la fonction d'atmosphère.

8. Agencement de commande d'atmosphère selon une quelconque revendication précédente, dans lequel le module de commande à distance (16) comprend un capteur (40) connecté à l'unité de commande à distance (38) pour influencer la fonction d'atmosphère sur la base de mesures de capteur.

9. Agencement de commande d'atmosphère selon une quelconque revendication précédente, dans lequel le boîtier de module de commande maître (18) comprend une élément d'entrée utilisateur connectée à l'unité de commande maîtresse (38) pour recevoir des entrées utilisateur influençant la fonction d'atmosphère.

10. Agencement de commande d'atmosphère selon une quelconque revendication précédente, dans lequel l'unité de commande maîtresse (28) est configurée pour communiquer avec un élément d'actionnement manoeuvrable (42) installé pour actionner un élément d'exécution d'activité (12) installé pour influencer l'atmosphère dans la zone dans le bâtiment ou adjacente à ce dernier.

11. Agencement de commande d'atmosphère selon une quelconque revendication précédente, comprenant en outre un bloc de détermination de distance configuré pour déterminer la distance entre la première interface sans fil et la seconde interface sans fil, comparer la distance déterminée à un seuil de distance et alerter un utilisateur de l'agencement que la distance entre les deux boîtiers est trop longue au cas où le seuil de distance est dépassé.

12. Agencement de commande d'atmosphère selon une quelconque revendication précédente, dans lequel la fonction d'atmosphère est une fonction de commande de niveau de lumière, où l'élément d'actionnement manoeuvrable (42) est un interrupteur et l'élément d'exécution d'activité (12) est une source de lumière.

13. Système d'automatisation de bâtiment, comprenant l'agencement de commande d'atmosphère selon une quelconque revendication précédente.
